# EUROPÄISCHE PATENTSCHRIFT

(11) **EP 0 433 792 B1**
(45) Veröffentlichungstag und Bekanntmachung des Hinweises auf die Patenterteilung: **07.09.1994**
(21) Anmeldenummer: 90123521.8
(22) Anmeldetag: 07.12.1990
(51) Int. Cl.: C04B 35/52

(54) **Verfahren zum Tempern von kohlenstoffhaltigen Rohlingen**
Method of baking carbon containing green bodies
Procédé de cuisson d'ébauches contenant du carbone

(30) Priorität: 20.12.1989 DE 3941978
(43) Veröffentlichungstag der Anmeldung: 26.06.1991
(73) Patentinhaber: Feist Intertec AG, CH-2502 Biel (CH)
(72) Erfinder: Feist, Horst J., Ing. grad., W-6969 Hardheim (DE)
(74) Vertreter: Clemens, Gerhard, Dr.-Ing.

(56) Entgegenhaltungen:
- EP-A- 0 080 534
- DE-A- 3 740 903
- US-A- 3 504 065
- CHEMICAL ABSTRACTS, Band 71, Nr. 10, 8. September 1969, Zusammenfassung Nr. 41095u, Columbus, Ohio, US; K. MATSUO et al.: "Carbonization of a green carbon body under pressure", & TANSO 55, 114-21
- CHEMICAL ABSTRACTS, Band 88, Nr. 26, 26. Juni 1978, Zusammenfassung Nr. 196230j, Columbus, Ohio, US; G.W. WEBER et al.: "Densification of carbon-carbon composites at 30 KSI", & EXT. ABSTR. PROGRAM - BIENN. CONF. CARBON, 13, 68-9
- CARBON, 11, 1973, Seiten 570-574;
- Ext. Abstr. Program - Bienn. Conf. Carbon, 13, Seiten 68-69

## Beschreibung

Die Erfindung betrifft ein verfahren zum Tempern von imprägnierten, kohlenstoffhaltigen Rohlingen, insbesondere zur Herstellung feuerfester Steine, Graphitelektroden oder dergleichen, die mit Pech oder dergleichen kohlenstoffhaltigem Imprägniermittel, das oberhalb einer Grenztemperatur Tg von etwa 300°C (Grad Celsius) unter Normaldruck (= 10⁵Pa (= Pascal)) Kohlenwasserstoff und andere schädliche Gase ausgast, imprägniert sind, bei welchem Verfahren die Rohlinge in einem Autoklav von Inertgas umgeben sind und auf die Tempertemperatur Tt erhitzt und dann abgekühlt werden, bei welchem die Rohlinge kalt - das heißt unterhalb der Grenztemperatur Tg - in einen bis zu einem inneren Höchstdruck Ph im Dauerbetrieb belastbaren, innen inert beheizbaren kalten Autoklav gestellt werden, bei welchem der Autoklav dann gasdicht verschlossen wird, bei welchem der Autoklav dann evakuiert wird auf einen Vakuumdruck Pv, bei welchem der Autoklav dann mit Inertgas gefüllt wird bis zu einem Startdruck Ps von mindestens 10⁵Pa und bei welchem dann bei gasdichtem Abschluß das Innere des Autoklav auf die Tempertemperatur Tt erhitzt und auf der Tempertemperatur gehalten wird, bis die Rohlinge auf die Tempertemperatur Tt im wesentlichen durchgewärmt sind.

Ein solches Verfahren ist aus der US-A-3,504,065 bekannt. Bei diesem bekannten verfahren treten Schwelstoffe, schädliche Gase und dergleichen Schadstoffe aus den Rohlingen aus und müssen entsorgt werden.

Aus der DE-A-37 40 903 ist ein Verfahren zur Herstellung von Kohlenstoff- oder Elektrographitkörpern bekannt, die zunächst eine primäre thermische Behandlung in Wasserstoffatmosphäre unter erhöhtem Druck durchlaufen und anschließend eine Calcinierbehandlung bei weiter erhöhter Temperatur erfolgt. Dadurch lassen sich Kohlenstoff- oder Elektrographitkörper mit erhöhter Rohdichte und Festigkeit herstellen. Auch bei diesem Verfahren treten schädliche Gase und dergleichen Schadstoffe aus den Rohlingen aus und müssen entsorgt werden.

Die Aufgabe der Erfindung besteht darin, ein Verfahren anzugeben, das beim Herstellen von kohlenstoffhaltigen Rohlingen die Umwelt weniger belastet und gleichzeitig die Herstellung von kohlenstoffwasserhaltigen Rohlingen mit erhöhter Verkokungsrate gewährleistet.

Diese Aufgabe wird dadurch gelöst, daß die Inertgaseinfüllung, insbesondere die vor Beginn des Temperns eingefüllte Inertgasfüllung, so bemessen ist, daß bereits bei Erreichen einer Schwelltemperatur Ts, die zwischen der Tempertemperatur Tt und der Verkokungstemperatur Tv liegt, bei der die Verkokung des Imprägniermittels unter dem jeweils herrschenden Betriebsdruck Pb beginnt, insbesondere bereits bei Erreichen dieser Verkokungstemperatur Tv, der endgültige Betriebsdruck Pb, der fast in der Höhe des Höchstdruckes Ph liegt, erreicht ist und dann durch Ablassen überschüssigen Inertgases bis zum Erreichen der Tempertemperatur Tt konstant aufrechterhalten wird, der Betriebsdruck Pb bei Tempertemperatur Tt zwischen 10⁶ und 10⁸Pa, insbesondere zwischen 10⁶ und 10⁷Pa liegt, nach dem Durchwärmen der Rohlinge auf die Tempertemperatur Tt die Beheizung abgebrochen und das Innere des Autoklaven abgekühlt wird bis auf mindestens die Grenztemperatur Tg, dann zum Druckausgleich überflüssiges Inertgas abgelassen wird und dann der Autoklav geöffnet und die getemperten, kalten Rohlinge entnommen werden.

Da nach der Erfindung die Rohlinge sich innerhalb des geschlossenen Autoklavs befinden, solange sie über die Grenztemperatur erhitzt sind, fallen die Schadstoffe nur innerhalb des geschlossenen Autoklavs an und können einwandfrei kontrolliert werden.

Beim erfinderischen Verfahren erfolgt das Tempern unter Druck. Dadurch kann derjenige Anteil des Imprägniermittels, der beim Tempern innerhalb des Rohlings verkokt, also zu der Schadstoffbildung nicht mehr beitragen kann, gegenüber sonst gleichen Temperbedingungen erhöht werden. Wenn man mit der Imprägnierung eine vorgegebene Verkokung innerhalb des Rohlings erzielen will, wird durch die erhöhte Verkokungsrate innerhalb des Rohlings auch die Menge des einzusetzenden Imprägniermittels herabgesetzt. Das spart Kosten und wirkt zusätzlich im Sinne der zugrundeliegenden Aufgabenstellung.

Sauerstoff kann die warme Oberfläche der Rohlinge oxydieren, so daß die fertig getemperten Rohlinge oberflächlich unbrauchbar sind. Man kann die betreffende Oberflächenschicht am fertig getemperten Rohling abtragen, aber das führt einerseits zu Verlust und andererseits zu neuen Abmessungen und das kann man dann nicht hinnehmen, wenn es sich bei dem Rohling um maßlich exakt vorgefertigte Steine oder dergleichen handelt.

Aus diesem Grunde ist es Aufgabe einer Weiterbildung, sicherzustellen, daß solche oberflächlichen Oxydationen vermieden werden. Diese Weiterbildung ist dadurch gekennzeichnet, daß als Inertgas Stickstoff eingesetzt wird. Da die Rohlinge außerhalb des Autoklavs kalt und innerhalb des Autoklavs keinem Sauerstoff ausgesetzt sind, wird die Oberflächenoxydation dann sicher unterbunden.

Eine weitere Verfahrensmöglichkeit besteht darin, daß während des Temperns zusätzlich Inertgas in den Autoklav eingedrückt wird.

Es empfiehlt sich schon aus Sicherheitsgründen, daß der Innendruck des Autoklavs ständig überwacht wird und eine Überschreitung des zulässigen Höchstdruckes Ph bzw. eines vorgegebenen, darunter liegenden maximalen Betriebsdruckes Pb durch dosiertes Ablassen von Inertgas verhindert wird.

Da die angestrebte Innenverkokung umso höher ist, je höher der Temperdruck ist, empfiehlt es sich, die diesbezüglichen Möglichkeiten des gegebenen Autoklavs auszunutzen. Das geschieht dadurch, daß die Inertgaseinfüllung, vorzugsweise die vor dem Tempern eingefüllte Inertgasfüllung, so bemessen ist, daß bei Tempertemperatur ein Betriebsdruck Pb erreicht ist, der fast in der Höhe des Höchstdruckes Ph liegt.

Die mit den Schadstoffen beladenen Inertgase, die abgelassen werden, zum Beispiel zum Überdruck-Abbau während des Temperns oder zum Druckausgleich vor dem Öffnen des Autoklavs oder aber als verbleibende Füllung des geöffneten Autoklavs, werden vorzugsweise durch thermische Nachverbrenung gereinigt, ehe sie an die Umwelt abgegeben oder weiterverwendet werden.

Es empfiehlt sich, die Inertgase, soweit nicht zur Drucksteuerung Teile vorzeitig abgelassen werden müssen, bis zur Erkaltung im Autoklav zu belassen, um dadurch die ausgedampften Schadstoffe durch Kondensation abzuscheiden, ehe der Autoklav geöffnet wird. Auf diese Weise wird die Beladung der dann freiwerdenden Inertgase reduziert und das Kondensat kann zur Weiterverarbeitung eingesammelt werden.

Nach dem erfindungsgemäßen Verfahren werden Innenverkokungsraten von mindestens 35 Gewichtsprozent, vorzugsweise mindestens 40 Gewichtsprozent, erzielt.

Es werden höhere Innenverkokungsraten erzielt, wenn, wie vorzugsweise vorgesehen, der Betriebsdruck Pb bei Tempertemperatur Tt zwischen 10⁶ und 10⁸ Pa, vorzugsweise zwischen 10⁶ und 10⁷ Pa, liegt. Im einzelnen sind Innenverkokungsraten erzielbar, bezogen auf das Gewicht, von über 70 % bei einem Betriebsdruck Pb bei Tempertemperatur Tt von 10⁶ Pa. Bei 10⁷ Pa sind sogar Innenverkokungsraten von über 80 % erzielbar.

Die Erfindung wird nun anhand von Beispielen näher erläutert.

### VERFAHRENSBEISPIEL 1

Formgerecht vorgepreßte Rohlinge für feuerfeste Steine aus A1 = 20 Gewichtsprozent M1 = Steinkohlepech als Imprägniermittel und A2 = 80 Gewichtsprozent M2 = Kokspulver werden auf T1 = 150°C vorgewärmt und in einen Autoklav eingestellt. Die Grenztemperatur dieser Rohlinge beträgt Tg = 300°C. Das Einstellen geschieht auf Paletten, die mit einem Fahrgestell in den Autoklav hineingefahren werden, wobei das Fahrgestell anschließend wieder herausgeholt wird. Die zulässige Innendruckbelastung des eingesetzten Autoklavs beträgt Ph = 10⁶ Pa.

Der Autoklav wird dann druckdicht verschlossen und auf Pv = 7000 Pa evakuiert und dann mit M3 = Stickstoff unter einem Startdruck Ps = 2 x 10⁵ Pa gefüllt. Dann wird mittels einer innerhalb des Autoklav angeordneten elektrischen Heizung das Innere des Autoklavs bis auf die Tempertemperatur Tt = 740°C aufgeheizt. Diese Tempertemperatur Tt ist nach Z1 = 30 Stunden Heizzeit erreicht. Dabei hat sich der Betriebsdruck Pb durch die Temperaturerhöhung und durch ausgasende Abscheidungen erhöht auf Pb = 7 x 10⁵ Pa.

Dieser Betriebsdruck Pb und die Tempertemperatur Tt werden während Z2 = 8 Stunden aufrechterhalten. Dann wird die Beheizung abgeschaltet und das Innere des Autoklavs kann abkühlen. Nach Z3 = 50 Stunden ist im Inneren des Autoklavs die Temperatur auf T2 = 250°C abgefallen. Der Druck des Prozeßgases ist dabei gleichzeitig auf P1 = 3,3 x 10⁵ Pa abgesunken.

Es wird nun durch dosiertes Ablassen von überschüssigem Prozeßgas Druckausgleich geschaffen und der Autoklav wird dann geöffnet und die fertig getemperten Rohlinge werden entnommen. Sie bestehen jetzt zu 100 % aus Kokspulver. Aus dem Gewichtsverlust gegenüber dem Ausgangsgewicht errechnet sich eine Innenverkokungsrate des Pechs von D1 = 52 Gewichtsprozent.

### VERFAHRENSBEISPIEL 2

Wie Beispiel 1 mit dem einzigen Unterschied, daß der höchste Betriebsdruck Pb = 7 x 10⁵ Pa nicht erst bei Erreichen der Tempertemperatur Tt, sondern durch zusätzliches Einblasen von Stickstoff bereits bei Erreichen der Verkokungstemperatur Tv = 400°C erzielt wird. Durch Abblasen überschüssigen Stickstoffs während der weiteren Aufheizung wird der erreichte Betriebsdruck Pb = 7 x 10⁵ Pa aufrechterhalten bis zum Erreichen der Tempertemperatur Tt und auch während der Haltezeit Z2.

Die Verkokungsrate ist höher als im Verfahrensbeispiel 1, nämlich D1 = 56 Gewichtsprozent.

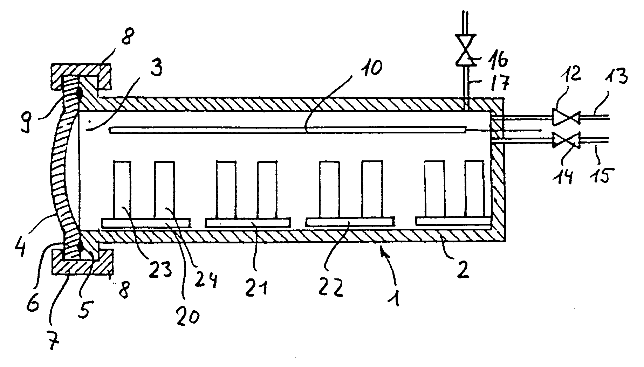

Die Zeichnung zeigt einen innendruckbelastbaren Autoklav 1, der in Verbindung mit den Ausführungsbeispielen einsetzbar ist. Das langgestreckte Gehäuse des Autoklavs ist mit 2 bezeichnet. Dieses Gehäuse 2 ist am einen Ende geschlossen und am anderen Ende hat es eine Öffnung 3, die durch einen aufgesetzten Deckel 4 verschließbar ist. Die Öffnung 3 ist von einem kreisrunden Flansch 5 umgeben, auf den ein Flansch 6 des Deckels 4 formschlüssig paßt. Die beiden Flansche 5 und 6 werden in geschlossenem Zustand durch aufgesetzte Krallen 7 und 8 zusammengehalten. Zwischen den beiden Flanschen 5 und 6 befindet sich ein Dichtring 9, der hydraulisch aufblasbar ist.

Das Betätigen der Krallen 7 und 8 erfolgt mit einer hydraulischen Einrichtung, deren Betätigung dahingehend gesichert ist, daß der Verschluß nur geöffnet werden kann nach erfolgtem Druckausgleich des Autoklav-Inneren zur Umgebung.

Innerhalb des Autoklavs ist eine von außen bedienbare elektrische Heizung 10 angeordnet. In den Autoklav mündet ein durch ein Ventil 12 absperrbarer Abblasstutzen 13, ein durch ein Ventil 14 absperrbarer Einblasstutzen 15 und ein mit einem Sicherheitsventil 16 ausgestatteter Überdruckausblasstutzen 17.

Innerhalb des Autoklavs sind Paletten 20, 21, 22 abgestellt, auf denen zu tempernde Rohlinge 23, 24 ... abgestellt sind.

## Patentansprüche

1. Verfahren zum Tempern von imprägnierten, kohlenstoffhaltigen Rohlingen, insbesondere zur Herstellung feuerfester Steine, Graphitelektroden oder dergleichen, die mit Pech oder dergleichen kohlenstoffhaltigem Imprägniermittel, das oberhalb einer Grenztemperatur Tg von etwa 300°C (Grad Celsius) unter Normaldruck (= 10⁵Pa (= Pascal)) Kohlenwasserstoff und andere schädliche Gase ausgast, imprägniert sind,
- bei welchem Verfahren die Rohlinge in einem Autoklav von Inertgas umgeben sind und auf die Tempertemperatur Tt erhitzt und dann abgekühlt werden,
- bei welchem die Rohlinge kalt - das heißt unterhalb der Grenztemperatur Tg - in einen bis zu einem inneren Höchstdruck Ph im Dauerbetrieb belastbaren, innen inert beheizbaren kalten Autoklav gestellt werden,
- bei welchem der Autoklav dann gasdicht verschlossen wird,
- bei welchem der Autoklav dann evakuiert wird auf einen Vakuumdruck Pv,
- bei welchem der Autoklav dann mit Inertgas gefüllt wird bis zu einem Startdruck Ps von mindestens 10⁵Pa und
- bei welchem dann bei gasdichtem Abschluß das Innere des Autoklav auf die Tempertemperatur Tt erhitzt und auf der Tempertemperatur gehalten wird, bis die Rohlinge auf die Tempertemperatur Tt im wesentlichen durchgewärmt sind,
**dadurch gekennzeichnet,** daß
- die Inertgaseinfüllung, insbesondere die vor Beginn des Temperns eingefüllte Inertgasfüllung, so bemessen ist, daß bereits bei Erreichen einer Schwelltemperatur Ts, die zwischen der Tempertemperatur Tt und der Verkokungstemperatur Tv liegt, bei der die Verkokung des Imprägniermittels unter dem jeweils herrschenden Betriebsdruck Pb beginnt, insbesondere bereits bei Erreichen dieser Verkokungstemperatur Tv, der endgültige Betriebsdruck Pb, der fast in der Höhe des Höchstdruckes Ph liegt, erreicht ist und dann durch Ablassen überschüssigen Inertgases bis zum Erreichen der Tempertemperatur Tt konstant aufrechterhalten wird,
- der Betriebsdruck Pb bei Tempertemperatur Tt zwischen 10⁶ und 10⁸Pa, insbesondere zwischen 10⁶ und 10⁷Pa liegt,
- nach dem Durchwärmen der Rohlinge auf die Tempertemperatur Tt die Beheizung abgebrochen und das Innere des Autoklaven abgekühlt wird bis auf mindestens die Grenztemperatur Tg,
- dann zum Druckausgleich überflüssiges Inertgas abgelassen wird und
- dann der Autoklav geöffnet und die getemperten, kalten Rohlinge entnommen werden.

2. Verfahren nach Anspruch 1,
**dadurch gekennzeichnet,** daß als Inertgas Stickstoff eingesetzt wird.

3. Verfahren nach Anspruch 1 oder 2,
**dadurch gekennzeichnet,** daß der Innendruck des Autoklavs ständig überwacht wird und eine Überschreitung des Höchstdrucks Ph bzw. eines vorgegebenen darunter liegenden maximalen Betriebsdrucks Pb durch dosiertes Ablassen von Inertgas verhindert wird.

4. Verfahren nach einem der vorhergehenden Ansprüchen,
**dadurch gekennzeichnet,** daß bereits bei Erreichen der Verkokungstemperatur Tv von 400°C während des Temperns zusätzlich Inertgas in den Autoklav eingedrückt wird.

5. Verfahren nach einem der vorhergehenden Ansprüchen,
**dadurch gekennzeichnet,** daß die Inertgase, die abgelassen werden, gereinigt werden, und zwar vorzugsweise durch thermische Nachverbrennung.

6. Verfahren nach einem der vorhergehenden Ansprüchen,
**dadurch gekennzeichnet,** daß die Beladung der Inertgase aus beim Tempern ausgedampften Anteilen des Imprägniermittels im wesentlichen durch Kondensation abgeschieden werden, ehe der Autoklav geöffnet wird.

## Claims

1. Method of baking impregnated, carbon-containing green bodies, in particular for the manufacture of refractory bricks, graphite electrodes or the like, which have been impregnated with pitch or a similar carbon containing impregnating agent which, above a limiting temperature Tg of about 300°C (degrees centigrade) under normal pressure (=10⁵Pa (= Pascal)), releases hydrocarbon gas and other harmful gases,
- in which method the green bodies are, in an autoclave, surrounded by inert gas and are heated to the baking temperature Tt and then cooled, and
- in which the green bodies are placed cold - that is to say below the limiting temperature Tg - into a cold autoclave which can be stressed up to an internal maximum pressure Ph in continuous operation and can be heated in the interior under inert conditions, and
- in which the autoclave is then sealed gas-tight, and
- in which the autoclave is then evacuated to a vacuum pressure Pv, and
- in which the autoclave is then filled with inert gas up to a starting pressure Ps of at least 10⁵Pa, and
- in which, with gas-tight sealing, the interior of the autoclave is then heated to the baking temperature Tt and held at the baking temperature until the green bodies have been substantially heated to the baking temperature Tt throughout,
characterized in that
- the inert gas filling, in particular the inert gas filling introduced before the start of baking, is such that, already when a threshold temperature Ts is reached which lies between the baking temperature Tt and the coking temperature Tv at which the coking of the impregnating agent starts under the particular prevailing operating pressure Pb, especially already when this coking temperature Tv is reached, the ultimate operating pressure Pb, which is almost at the level of the maximum pressure Ph, is reached and then kept constant by letting off excess inert gas until the baking temperature Tt is reached,
- the operating pressure Pb at the baking temperature Tt is between 10⁶ and 10⁸Pa, especially between 10⁶ and 10⁷Pa,
- after the green bodies have been heated throughout to the baking temperature Tt, the heating is stopped and the interior of the autoclave is cooled down at least to the limiting temperature Tg,
- superfluous inert gas is then let off for balancing the pressure, and
- the autoclave is then opened and the baked, cold bodies are taken out.

2. Method according to Claim 1, characterized in that the inert gas used is nitrogen.

3. Method according to Claim 1 or 2, characterized in that the internal pressure of the autoclave is continuously monitored and exceeding the maximum pressure ph or a preset lower maximum operating pressure Pb is prevented by controlled letting-off of inert gas.

4. Method according to one of the preceding claims, characterized in that inert gas is additionally injected into the autoclave during baking even before the coking temperature Tv of 400°C is reached.

5. Method according to one of the preceding claims, characterized in that the inert gases let off are purified, in particular preferably by thermal after combustion.

6. Method according to one of the preceding claims, characterized in that the loading of the inert gases with fractions of the impregnating agent evaporated out during baking is substantially precipitated by condensation before the autoclave is opened.

## Revendications

1. Procédé pour le recuit d'ébauches imprégneés contenant du carbone, en particulier pour la fabrication de mattes résistant au feu, d'électrodes de graphite ou autres produits de ce genre, qui sont imprégnées avec du brai ou avec une substance de ce type contenant du carbone, qui dégaze à partir d'une certaine température Tg d'environ 300°C (degrés Celsius) sous pression normale (= 10⁵ Pa (= Pascal)) des hydrocarbures et autres gaz nocifs,
- procédé par lequel les ébauches sont entourées de gaz inerte dans un autoclave et sont chauffées à une température de recuit Tt pour être ensuite refroidies,
- procédé par lequel on place les ébauches à froid (c'est-à-dire en dessous de la température limite Tg) dans un autoclave froid que l'on peut chauffer, dont l'atmosphère interieure est inerte, et que l'on peut charger en continu jusqu'à atteindre une pression maximum intérieure Ph,
- procédé par lequel l'autoclave est alors refermé de façon hermétique aux gaz,
- procédé par lequel l'autoclave est ensuite évacué à une pression de vide Pv,
- procédé par lequel l'autoclave est alors rempli d'un gaz inerte jusqu'à atteindre une pression de départ Ps d'au minimum 10⁵ Pa et
- procédé par lequel, après avoir fermé l'autoclave de façon étanche aux gaz, l'intérieur de l'autoclave est alors chauffé à la température de recuit Td et est maintenu à la température de recuit, jusqu'à ce que les ébauches soient pour l'essentiel chauffées en profondeur à la température de recuit Tt,
caractérisées en ce que,
- le remplissage par un gaz inerte, en particulier le remplissage par un gaz inerte que l'on effectue avant le début du recuit, est calculé de telle sorte que, déjà, lorsque l'on atteint une température de début de carbonisation Ts, comprise entre la température de recuit Tt et la température de cokéfaction Tv, température à laquelle la cokéfaction de l'agent de saturation débute sous la pression de fonctionnement qui règne dans ce cas, en particulier, déjà, lorsque l'on atteint cette température de cokéfaction Tv, on a atteint la pression définitive de fonctionnement Pb, qui se situe presque au niveau de la pression maximale, et on maintient la pression de fonctionnement Pb à une valeur constante, en évacuant alors les gaz inertes excédentaires jusqu'à ce que l'on ait atteint la température de recuit Tt,
- la pression de fonctionnement Pb à la température de recuit Tt se trouvant comprise entre 10⁶ et 10⁸ Pa, en particulier entre 10⁶ et 10⁷ Pa,
- après le chauffage en profondeur de l'ébauche à la température de recuit Tt, on interrompt le chauffage et on refroidit l'intérieur de l'autoclave en descendant jusqu'à, au minimum, la température limite Tg,
- puis on laisse s'échapper le gaz inerte en excès pour équilibrer la pression et
- l'on ouvre ensuite l'autoclave et l'on enlève les ébauches refroidies qui viennent de subir le recuit.

2. Procédé d'après la revendication 1, caractérisé en ce que, le gaz inerte que l'on emploie est de l'azote.

3. Procédé d'après les revendications 1 ou 2, caractérisé en ce que, l'on surveille constamment la pression intérieure de l'autoclave et que l'on empêche, par un lâchage dosé de gaz inerte ,le dépassement de la pression maximale Ph ou de la pression de fonctionnement maximale Pb prédéfinie, laquelle lui est inférieure.

4. Procédé d'après l'une des revendications précédentes, caractérisé en ce que, l'on injecte déjà dans l'autoclave une quantité supplémentaire de gaz inerte lorsque l'on atteint une température de cokéfaction Tv de 400°C pendant le recuit.

5. Procédé d'après l'une des revendications précédentes, caractérisé en ce que, les gaz inertes que l'on relâche sont nettoyés, et cela, de préférence par post-combustion thermique.

6. Procédé d'après l'une des revendications précédentes, caractérisé en ce que, avant d'ouvrir l'autoclave, l'on extrait, essentiellement par condensation, la charge des gaz inertes provenant des constituants de l'agent de saturation que l'on a fait évaporer lors du recuit.
